# EUROPÄISCHE PATENTSCHRIFT

(11) **EP 3 757 444 B1**
(45) Veröffentlichungstag und Bekanntmachung des Hinweises auf die Patenterteilung: **01.10.2025**
(21) Anmeldenummer: 19182359.0
(22) Anmeldetag: 25.06.2019
(51) Int. Cl.: F16P 3/14

(54) **ÜBERWACHUNGSVORRICHTUNG UND VERFAHREN ZUR ABSICHERUNG VON GEFAHRENBEREICHEN**
MONITORING DEVICE AND METHOD FOR SECURING HAZARDOUS AREAS
ÉLÉMENT DE SURVEILLANCE ET PROCÉDÉ DE SÉCURISATION DES ZONES DANGEREUSES

(43) Veröffentlichungstag der Anmeldung: 30.12.2020
(73) Patentinhaber: Leuze electronic GmbH + Co. KG, 73277 Owen/Teck (DE)
(72) Erfinder: Lehner, Werner, 81371 München (DE)
(74) Vertreter: Ruckh, Rainer Gerhard

(56) Entgegenhaltungen:
- EP-A2- 1 788 467
- WO-A1-2017/067876
- US-A1- 2019 105 788

## Beschreibung

Die Erfindung betrifft eine Überwachungsvorrichtung und ein Verfahren zur Absicherung von Gefahrenbereichen.

Bekannte Überwachungsvorrichtungen werden zur Gefahrenbereichsüberwachung an Fahrzeugen eingesetzt, die insbesondere als fahrerlose Transportsysteme oder allgemein als autonome, das heißt autonom fahrende Fahrzeuge, ausgebildet sein können. Typischerweise ist an der Frontseite als Bestandteil der Überwachungsvorrichtung ein Sensor angeordnet, mittels dessen das Vorfeld des Fahrzeugs als Gefahrenbereich überwacht wird um Kollisionen ausschließen zu können. Ein hierfür besonders geeigneter Sensor ist ein optischer Sensor in Form eines Flächendistanzsensors, das heißt eines scannenden Distanzsensors.

Mit einem solchen Flächendistanzsensor wird innerhalb eines an den Gefahrenbereich angepassten Schutzfeld eine Objektdetektion durchgeführt. Wird mit dem Flächendistanzsensor ein Objekt im Schutzfeld erkannt, wird mit dem Flächendistanzsensor ein Sicherheitssignal generiert, das an die Fahrzeugsteuerung des Fahrzeugs ausgegeben wird, wodurch das Fahrzeug angehalten wird und somit gefahrenbringende Kollisionen vermieden werden.

Die US 2019/105 788 A1 betrifft ein Sicherheitssystem zur Absicherung eines kooperativen Betriebs von Menschen, Robotern und Maschinen an einer technischen Anlage. Das Sicherheitssystem umfasst eine erste sicherheitsbezogene Einrichtung, die dazu ausgebildet ist, einen ersten Gefahrenbereich der technischen Anlage zu überwachen und die technische Anlage in einen gefahrlosen Zustand zu überführen, wenn eine Gefahrensituation erkannt wird. Das Sicherheitssystem ist ferner dazu ausgebildet, eine autonom arbeitende, technische Einheit zu identifizieren und die autonom arbeitende, technische Einheit zu registrieren, wenn diese eine definierte Bedingung erfüllt, sowie die Überwachung des ersten Gefahrenbereichs durch die erste sicherheitsbezogene Einrichtung als Reaktion auf die Registrierung zu beschränken.

Die WO 2017/067876 A1 betrifft ein Verfahren zum Betreiben eines Manipulatorsystems, umfassend insbesondere ein fahrerloses Transportsystem und ferner insbesondere ein fahrerloses Transportfahrzeug, wobei ein Schutzfeld des Manipulatorsystems mittels einer Überwachungseinrichtung überwacht wird. Gemäß dem Verfahren erfolgt ein Bereitstellen von Umgebungsinformation betreffend eine Umgebung des Manipulatorsystems, ein Anpassen des Schutzfeldes basierend auf der Umgebungsinformation und eine Überwachung des angepassten Schutzfeldes mittels der Überwachungseinrichtung.

Der Erfindung liegt die Aufgabe zugrunde, eine Überwachungsvorrichtung und ein Verfahren bereitzustellen, mittels derer eine ortsflexible und sichere Gefahrenbereichsüberwachung ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung mit einem Fahrzeug, auf welchem eine Fahrzeugsteuerung und wenigstens ein Sensor vorhanden sind. Der Sensor ist zur Erfassung von Objekten innerhalb wenigstens eines Schutzfelds ausgebildet. Eine berührungslos arbeitende Kommunikationseinrichtung ist vorgesehen, welche für eine Datenübertragung zwischen dem Sensor und/oder der Fahrzeugsteuerung einerseits und einer Maschinensteuerung einer stationären Maschine ausgebildet ist. Allein mit dem Sensor kann an unterschiedlichen Bereichen der Maschine eine Gefahrenbereichsüberwachung durchgeführt werden, wobei ein Gefahrenbereich an der Maschine dadurch überwacht wird, dass das Fahrzeug so an der Maschine positioniert ist, dass der Gefahrenbereich zumindest teilweise vom Schutzfeld umfasst ist. Abhängig von Sensorsignalen des Sensors wird in der Maschinensteuerung ein Sicherheitssignal generiert.

Die Erfindung betrifft weiterhin ein Verfahren zur Absicherung von Gefahrenbereichen.

Der Grundgedanke der Erfindung besteht somit darin, einen an einem Fahrzeug vorgesehenem Sensor, der für eine Schutzfeld-Überwachung ausgebildet ist, für eine Gefahrenbereichsüberwachung an stationären Maschinen einzusetzen, wobei der Begriff Maschine auch komplexe Anlagen umfasst.

Damit wird eine flexible, umfangreiche Gefahrenbereichsüberwachung an Maschinen unterschiedlicher Ausprägungen ermöglicht.

Anlagen und Maschinen erfüllen in industriellen Einsätzen typischerweise komplexe, zeitlich veränderliche Funktionen, was zur Folge hat, dass sich je nach Betriebsort und Prozessschritt der Maschine örtlich und zeitlich unterschiedliche Gefahrenbereiche ergeben können.

Derartige Gefahrenbereiche müssen generell durch geeignete Schutzmaßnahmen gesichert werden, damit Gefahren für Personen vermieden werden.

Hierzu können insbesondere fest installierte Schutzeinrichtungen eingesetzt werden, wie zum Beispiel Schutzzäune. Abgesehen davon, dass diese Schutzeinrichtungen einen hohen Installationsaufwand bedeuten, versperren diese auch das Umfeld der jeweiligen Maschine, wodurch insbesondere der Materialtransport zu der Maschine oder von dieser weg erschwert ist. Weiterhin ist nachteilig, dass derartige Schutzzäune keine Anpassung an sich verändernde Arbeitszustände der Maschine und dadurch bedingte unterschiedliche Gefahrenbereiche erlauben.

Entsprechende Schwierigkeiten ergeben sich auch bei fest an der Maschine installierte Sensoren zur Gefahrenbereichsüberwachung. Mit diesen können nur in eingeschränktem Umfang sich verändernde Gefahrenbereiche überwacht werden.

Insbesondere bei Maschinen oder Produktionsanlagen mit vielen prozessbedingt örtlich bzw. zeitlich wechselnden Gefahrenstellen ist die ständige Überwachung jeder einzelnen Gefahrenstelle mit ortsfest installierten Schutzeinrichtungen mit einem hohen Material- und Installationsaufwand verbunden. Auf diese Weise werden also ständig alle Maschinenbereiche überwacht, obwohl prozessbedingt zu einem Zeitpunkt nur von einer Untermenge dieser Maschinenbereiche eine Gefährdung ausgeht.

Diese Probleme werden mit der erfindungsgemäßen Überwachungsvorrichtung auf überraschend einfache Weise gelöst.

Erfindungsgemäß wird dabei ein an einem Fahrzeug angeordneter und damit mobiler Sensor für eine Gefahrenbereichsüberwachung an einer stationären Maschine eingesetzt.

Der Sensor beziehungsweise die Fahrzeugsteuerung sind über eine Kommunikationseinrichtung mit der Maschinensteuerung verbunden, so dass diese Daten austauschen können. Diese Kommunikationseinrichtung nutzend kann der Sensor am Fahrzeug für eine Gefahrenbereichsüberwachung an der stationären Maschine genutzt werden.

Hierzu wird das Fahrzeug, vorzugsweise selbsttätig, an der Maschine so positioniert, dass das Schutzfeld den jeweils zu schützenden Gefahrenbereich zumindest teilweise, besonders vorteilhaft vollständig umfasst. Durch eine Objekterfassung mittels des Sensors derart, dass ein Eindringen von Objekten in das Schutzfeld überwacht wird, wird dann der Gefahrenbereich an der stationären Maschine erfasst. Die entsprechenden Sensorsignale werden dann direkt vom Sensor oder von der Fahrzeugsteuerung über die Kommunikationseinrichtung an die Maschinensteuerung gesendet, wo diese zur Generierung eines Sicherheitssignals genutzt werden. Vorteilhaft generiert die Maschinensteuerung dann einen Abschaltbefehl, wenn mit dem optischen Sensor ein Objekteingriff im Schutzfeld festgestellt wird.

Da das Fahrzeug als mobile Einheit flexibel an unterschiedlichen Orten positioniert werden kann, kann allein mit dem Sensor am Fahrzeug an unterschiedlichen Bereichen der Maschine eine Gefahrenbereichsüberwachung durchgeführt werden. Weiterhin kann natürlich das Fahrzeug an unterschiedlichen Maschinen positioniert werden, so dass mit dem Sensor des Fahrzeugs an mehreren Maschinen eine Gefahrenbereichsüberwachung durchgeführt werden kann.

Zur Erfüllung der normativen Anforderungen für einen Einsatz im Bereich der Sicherheitstechnik, insbesondere im Bereich des Personenschutzes bilden die Fahrzeugsteuerung, die Maschinensteuerung, der Sensor und die Kommunikationseinrichtung sicherheitsgerichtete Einheiten aus.

Die Maschinensteuerung, die Fahrzeugsteuerung und der Sensor können hierzu einen fehlersicheren, insbesondere redundanten, zweikanaligen Aufbau aufweisen. Die Kommunikationseinrichtung kann eine fehlersichere Datenübertragung durch eine Absicherung mit Prüfsummen oder dergleichen gewährleisten. Die Kommunikationseinrichtung kann beispielsweise derart ausgebildet sein, dass mit dieser bidirektional Funksignale übertragen werden.

Vorteilhaft ist der Sensor ein optischer Sensor oder ein Radarsensor, welcher zur Erfassung von Objekten innerhalb zwei- und/oder dreidimensionaler Schutzfelder ausgebildet ist.

Dabei ist zweckmäßig der Sensor ein Distanzsensor.

Insbesondere ist der optische Sensor ein Flächendistanzsensor oder ein Kamera-Sensor.

Prinzipiell kann der optische Sensor auch von einer Reihenanordnung von Lichttastern ausgebildet sein, die einen Reflexions-Lichtvorhang ausbilden.

Gemäß einer vorteilhaften Ausführungsform ist das Fahrzeug ein autonomes Fahrzeug.

Besonders vorteilhaft wird von der Maschinensteuerung über die Kommunikationseinrichtung an die Fahrzeugsteuerung eine Zielposition gesendet, an welcher das Fahrzeug positioniert werden soll.

Anhand der übersendeten Zielposition kann dann die Fahrzeugsteuerung das Fahrzeug in diese Zielposition verfahren, so dass keine weiteren Justagevorgänge mehr erforderlich sind.

Weiter vorteilhaft wird von der Fahrzeugsteuerung über die Kommunikationseinrichtung an die Maschinensteuerung in vorgegebenen Zeitabständen die aktuelle Ist-Position des Fahrzeugs an die Maschinensteuerung übertragen.

Damit kann eine zeitliche Abstimmung erfolgen, zu welchen Zeiten mit dem Sensor des Fahrzeugs eine Gefahrenbereichsüberwachung an der Maschine durchgeführt werden kann.

Die Bestimmung der Ist-Position kann anhand einer Spurführung auf der Fahrbahn, die mit einer geeigneten Sensorik abgetastet wird, erfolgen. Die Spurführung kann in Form von 2D-Barcodes, RFID-Tags oder dergleichen ausgebildet sein. Alternativ kann die Bestimmung der Ist-Position durch Erfassung von bekannten stationären Objekten erfolgen.

Weiterhin kann die Fahrzeugsteuerung auch mit Maschinensteuerungen mehrerer Maschinen Daten austauschen. Damit kann eine Zeiteinteilung erfolgen, wann mit dem Sensor der Fahrzeugsteuerung ein Gefahrenbereich an einer bestimmten Maschine durchgeführt wird. Vorzugsweise können hierzu geeignete Positionierungen vorgegeben werden, insbesondere durch geeignete Anforderungen die von der Maschinensteuerung über die Kommunikationseinrichtung an die Fahrzeugsteuerung gesendet werden.

Gemäß einer besonders vorteilhaften Weiterbildung der Erfindung ist mittels des Sensors ein Gefahrenbereich am Fahrzeug überwachbar.

Damit wird die Funktionalität der erfindungsgemäßen Überwachungsvorrichtung weiter erhöht. So kann insbesondere während der Fahrten des Fahrzeugs mit dem Sensor am Fahrzeug selbst, insbesondere in dessen Vorfeld, eine Gefahrenbereichsüberwachung durchgeführt werden, und während der Stillstandszeiten des Fahrzeugs an einer Maschine an dieser eine Gefahrenbereichsüberwachung durchgeführt werden.

Die Funktionalität der erfindungsgemäßen Überwachungsvorrichtung kann noch weiter dadurch erhöht werden, dass anhand von Sensorsignalen des Sensors eine Navigation des Fahrzeugs erfolgt.

Eine weitere Flexibilisierung der mit dem Sensor durchgeführten Überwachung wird dadurch erzielt, dass mit dem Sensor Objektüberwachungen in unterschiedlichen Schutzfeldern durchführbar sind.

Hierzu können insbesondere im Sensor aus einer Vielzahl von Schutzfeldern ein spezifisches Schutzfeld aktivieren.

Damit kann situationsbedingt im Sensor ein geeignetes Schutzfeld ausgewählt werden, wodurch eine optimale Anpassung an den jeweils zu überwachenden Gefahrenbereich ermöglicht wird.

Gemäß einer vorteilhaften Ausgestaltung ist am Fahrzeug eine Einstellvorrichtung vorgesehen, mittels dessen die Orientierung des Sensors einstellbar ist.

Dabei kann abhängig von der Orientierung des optischen Sensors ein Schutzfeld aktivierbar sein.

Durch diese Einstellmöglichkeit kann die Orientierung des Schutzfelds des Sensors an die jeweilige Gefahrenbereich-Situation angepasst werden. Wird beispielsweise mit dem Sensor in Form eines Flächendistanzsensors, eines Kamerasensors oder eines Reflex-Lichtvorhangs ein flächiges, zweidimensionales Schutzfeld überwacht, so kann durch die Einstellrichtung der Sensor so eingestellt werden, dass ein in einer horizontalen oder in einer vertikalen Ebene orientiertes Schutzfeld überwacht wird.

An einer Einstellrichtung oder an einer anderen Stelle eines Fahrzeugs, insbesondere eines autonomen Fahrzeugs, kann zusätzlich zu den Überwachungssensoren bildenden Sensoren auch eine IP-Kamera zur Visualisierung und Livebilderfassung des überwachten Schutzfeldes angebracht sein. Über die drahtlose Kommunikationseinrichtung des Fahrzeugs können dann Livestream Bilder der Kamera zur visuellen Überwachung an einen Produktionsleitstand übertragen werden.

Die Erfindung wird im Folgenden anhand der Zeichnungen erläutert. Es zeigen:
- Figur 1:: Schematische Darstellung der erfindungsgemäßen Überwachungsvorrichtung.
- Figur 2:: Ausführungsbeispiel eines Sensors für die Überwachungsvorrichtung gemäß Figur 1.
- Figur 3:: Erstes Applikationsbeispiel für eine Überwachung mit der Überwachungsvorrichtung gemäß Figur 1.
- Figur 4:: Zweites Applikationsbeispiel für eine Überwachung mit der Überwachungsvorrichtung gemäß Figur 1.

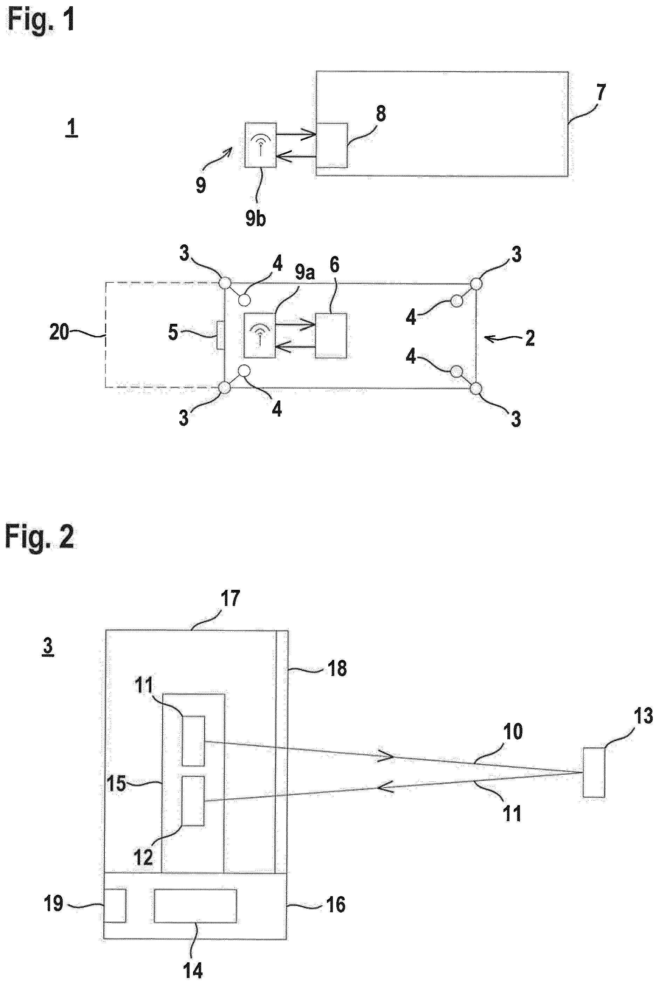

Figur 1 zeigt ein Ausführungsbeispiel der erfindungsgemäßen Überwachungsvorrichtung 1. Auf einem autonomen Fahrzeug, das im vorliegenden Fall in Form eines fahrerlosen Transportsystems 2 ausgebildet ist, sind als Bestandteile der Überwachungsvorrichtung 1 vier Sensoren 3 angeordnet, die im vorliegenden Fall als optische Sensoren 3 ausgebildet sind. Prinzipiell könnten die Sensoren 3 auch als Radarsensoren ausgebildet sein.

Die Sensoren 3 sind im vorliegenden Fall identisch ausgebildet, was jedoch nicht zwingend ist. Wie Figur 1 zeigt, ist an jeder Ecke des fahrerlosen Transportsystems 2 ein Sensor 3 angeordnet. Die Anordnung und Anzahl der Sensoren 3 kann jedoch auch an der Konfiguration gemäß Figur 1 verschieden sein. Die Sensoren 3 sind im vorliegenden Fall an Einstellvorrichtungen 4 schwenkbar gelagert.

An der Frontseite des fahrerlosen Transportsystems 2 ist ein Navigationssensor 5 angeordnet. Der Navigationssensor 5 wie auch die Sensoren 3 sind an eine Fahrzeugsteuerung 6 angeschlossen. Der Navigationssensor 5 generiert Navigationssignale, die in die Fahrzeugsteuerung 6 für eine Navigation des fahrerlosen Transportsystems 2 eingelesen werden. Der Navigationssensor 5 kann beispielsweise eine Spurführung auf der Fahrbahn, auf welcher das Fahrzeug bewegt wird detektieren, wodurch die aktuelle Ist-Position bestimmt werden kann. Die Spurführung kann von einer Linearanordnung von 2D-Barcodes oder auch RFID-Tags gebildet sein, von welchen Absolutpositionswerte kodiert sind, die mit dem Navigationssensor 5 erfasst werden.

Generell können auch die Sensoren 3 zu Navigationszwecken verwendet werden. Ein zusätzlicher Navigationssensor 5 ist in diesem Fall nicht erforderlich.

Figur 1 zeigt weiterhin eine stationär angeordnete Maschine 7, die von einer Maschinensteuerung 8 gesteuert wird, die Bestandteil der erfindungsgemäßen Überwachungsvorrichtung 1 ist. Als weiterer Bestandteil der erfindungsgemäßen Überwachungsvorrichtung 1 ist eine Kommunikationseinrichtung 9 vorgesehen. Die Kommunikationseinrichtung 9 umfasst ein erstes Kommunikationsmodul 9a, das an die Fahrzeugsteuerung 6 angeschlossen ist, und ein zweites Kommunikationsmodul 9b, das an die Maschinensteuerung 8 angeschlossen ist. Mittels der Kommunikationsmodule 9a, 9b erfolgt eine bidirektionale Datenübertragung. Im vorliegenden Fall werden die Daten in Form von Funksignalen übertragen. Hierzu sind in jedem Kommunikationsmodul 9a, 9b ein Funksender und ein Funkempfänger vorgesehen.

Die Überwachungsvorrichtung 1 wird im Bereich der Sicherheitstechnik eingesetzt. Hierzu sind deren Komponenten, insbesondere die Fahrzeugsteuerung 6, die Maschinensteuerung 8, die Kommunikationseinrichtung 9 und die Sensoren 3 als sicherheitsgerichtete Einheiten ausgebildet. Die Fahrzeugsteuerung 6 und die Maschinensteuerung 8 können hierzu aus zwei sich zyklisch überwachenden Rechnereinheiten bestehen. Die Datenübertragung über die Kommunikationseinrichtung 9 kann durch Prüfsummen abgezeichnet sein.

Die optischen Sensoren 3 der Überwachungsvorrichtung 1 sind im vorliegenden Fall als Flächendistanzsensoren ausgebildet. Ein entsprechendes Ausführungsbeispiel zeigt Figur 2. Der dort in seiner Seitenansicht dargestellte Flächendistanzsensor weist einen Lichtstrahlen 10 emittierenden Sender 11 und einen Lichtstrahlen 10 empfangenden Empfänger 12 auf, die einen nach einem Impuls-Laufzeit-Verfahren arbeitenden Distanzsensor ausbilden. Zur Distanzbestimmung eines Objekts 13 wird in einer Auswerteeinheit 14 die Laufzeit der Lichtstrahlen 10 vom Sender 11 zum Objekt 13 und zurück zum Empfänger 12 bestimmt und in einen Distanzwert umgerechnet. Der Sender 11 und Empfänger 12 sind in einem rotierenden Messkopf 15 angeordnet. Dieser sitzt auf einem stationären Sockel 16 auf, in dem die Auswerteeinheit 14 untergebracht ist. Der motorisch angetriebene Messkopf 15 dreht sich um eine vertikale Drehachse (bezogen auf die Darstellung gemäß Figur 1). Diese Sensorkomponenten sind in einem auf dem Sockel 16 gelagerten Gehäuse 17 angeordnet. Die Lichtstrahlen 10 werden durch ein Fenster 18 im Gehäuse 17 geführt. An die Auswerteeinheit 14 ist ein Schaltausgang 19 für eine Signalausgabe angeschlossen.

Durch die Drehbewegung des Messkopfs 15 werden die Lichtstrahlen 10 in einem in einer horizontalen Ebene liegenden Abtastbereich periodisch abgelenkt. Der Winkelbereich des Abtastbereichs ergibt sich durch die Ausdehnung des Fensters 18 in Umfangsrichtung des Gehäuses 17.

Durch die fortlaufenden Distanzmessungen und Bestimmung der aktuellen Winkelpositionen der Lichtstrahlen 10 kann eine Positionsbestimmung von Objekten 13 im Abtastbereich durchgeführt werden.

Für den Einsatz im Bereich der Sicherheitstechnik weist die Auswerteeinheit 14 einen redundanten Aufbau in Form zweier sich zyklisch überwachenden Rechnereinheit auf.

Generell können die Sensoren 3 auch als Kamera-Sensoren oder Reflex-Lichtvorhänge ausgebildet sein.

Mit den Sensoren 3 erfolgt generell eine Schutzfeld-Überwachung. Während der Fahrt des fahrerlosen Transportsystems 2 erfolgt beispielsweise mit zwei Sensoren 3 eine Überwachung eines Schutzfelds 20 im Vorfeld des fahrerlosen Transportsystems 2. Die Auswertung erfolgt im jeweiligen optischen Sensor 3 vorzugsweise derart, dass abhängig davon, ob im Schutzfeld 10 ein Objekt 13 erkannt wird oder nicht ein binäres Schaltsignal generiert wird, das heißt die Schaltzustände des Schaltsignals geben an, ob sich ein Objekt 13 im Schutzfeld 10 befindet oder nicht.

Da mit den Flächendistanzsensoren ein flächiger Abtastbereich abgetastet wird, sind auch die Schutzfelder 20 als Teilflächen des Abtastbereichs flächige Bereiche. Bei einer Ausbildung eines Sensors 3 als Kamera- oder Radar- Sensor können auch dreidimensionale Schutzfelder 20 definiert sein.

In jedem Sensor 3 sind mehrere Schutzfelder 20 abgespeichert oder es können mehrere Schutzfelder 20 in diesen eingegeben werden, so dass je nach Anforderungen im Sensor 3 wenigstens ein Schutzfeld 20 aktiviert werden kann, innerhalb dessen dann Objektdetektionen durchgeführt werden.

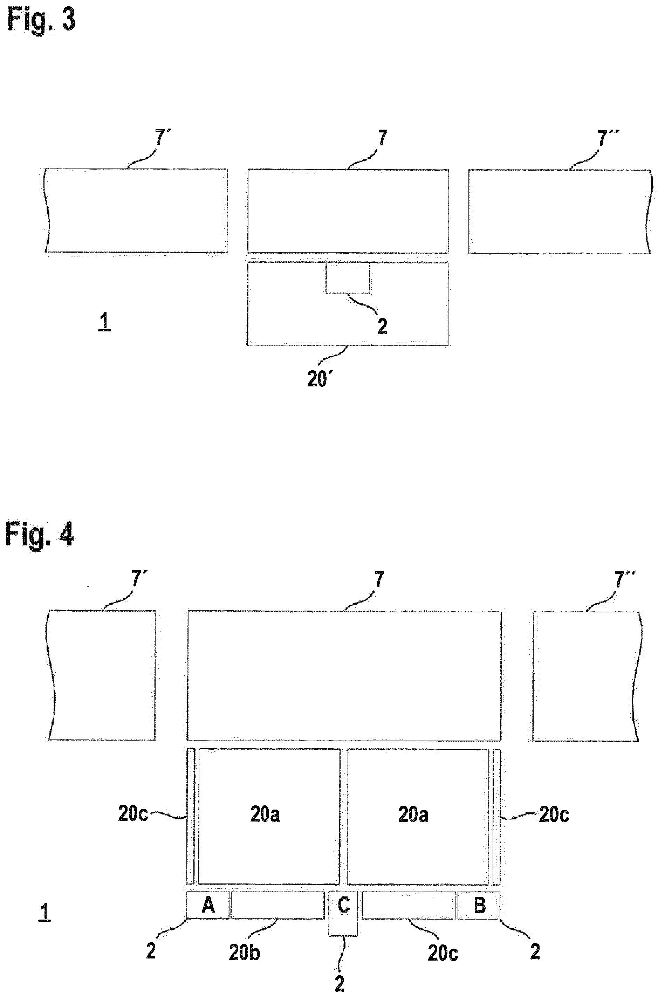

Erfindungsgemäß werden die Sensoren 3 des fahrerlosen Transportsystems 2 auch für eine Gefahrenbereichsüberwachung an Maschinen 7 eingesetzt, was in Figur 3 veranschaulicht ist. Figur 3 zeigt eine Reihenanordnung von drei Maschinen 7, 7', 7", wobei jede dieser Maschinen 7, 7', 7" eine Maschinensteuerung 8 und ein Kommunikationsmodul 9b aufweist.

Dabei ist das fahrerlose Transportsystem 2 an einer Maschine 7 positioniert um dann einen Gefahrenbereich von dieser Maschine 7 überwachen zu können. Mit den Sensoren 3 können dann Teil-Schutzfelder überwacht werden, die sich zu dem in Figur 3 dargestellten Schutzfeld 20' ergänzen. Dieses Schutzfeld 20' ist so dimensioniert, dass der gesamte Gefahrenbereich an der Maschine 7 überwacht wird.

Zur Positionierung des fahrerlosen Transportsystems 2 sendet die Maschinensteuerung 8 der Maschine 7 eine Zielposition an die Fahrzeugsteuerung 6 des fahrerlosen Transportsystems 2. Umgekehrt sendet die Fahrzeugsteuerung 6 in regelmäßigen Zeitabständen die Ist-Position des fahrerlosen Transportsystems 2 an die Maschinen 7. Anhand dieser Information führt das fahrerlose Transportsystem 2 selbstständig in die Zielposition an der Maschine 7 ein und übernimmt die Gefahrenbereichsüberwachung durch Objektsteuerungen im Schutzfeld 20'. Wird im S chutzfeld 20' ein Obj ekteingriff registriert, wird in einem der Sensoren 3 ein entsprechendes Schaltsignal generiert, das über die Kommunikationseinrichtung 9 an die Maschinensteuerung 8 übertragen wird. Dadurch generiert die Maschinensteuerung 8 ein Sicherheitssignal, das zum Abschalten der Maschine 7 führt.

Je nach Betriebsart der Maschine 7 können Größe und Lage des Gefahrenbereichs variieren. Dementsprechend kann hierzu das Schutzfeld 20' angepasst werden. Weiterhin kann das fahrerlose Transportsystem 2 auch zu den anderen Maschinen 7 verfahren werden um dort Gefahrenbereichsüberwachungen durchzuführen.

Figur 4 zeigt eine Gefahrenbereichsüberwachung in Form einer mehrseitigen Zugangssicherung an der Maschine 7 der Maschinen-Reihenanordnung gemäß Figur 3.

Die Gefahrenbereichsüberwachung wird mit den Sensoren 3 zweier fahrerloser Transportsysteme 2 in den mit A und B bezeichneten Positionen durchgeführt, während ein weiteres fahrerloses Transportsystem 2 Material an die Maschine 7 anliefert.

Mit jeweils einem der Sensoren 3 der fahrerlosen Transportsysteme 2 in den Positionen A und B wird ein horizontales Schutzfeld 20a überwacht. Diese Schutzfelder 20a decken den Gefahrenbereich vor der Maschine 7 ab. Jeweils ein Sensor 3 der fahrerlosen Transportsysteme 2 in den Positionen A und B wird mit der Einstellvorrichtung 4 so geschwenkt, dass mit diesen Sensoren 3 ein vertikales Schutzfeld 20c als Begrenzung des Gefahrenbereichs überwacht wird.

Schließlich wird mit jeweils einem Sensor 3 der fahrerlosen Transportsysteme 2 in den Positionen A und B ein Schutzfeld 20b überwacht. Die Schutzfelder 20b ergänzen sich zu einem Muting-Bereich. Wird innerhalb des Muting-Bereichs das fahrerlose Transportsystem 2 in der Position C als zulässiges Objekt 13 erkannt, werden die weiteren Sensoren 3, die die Schutzfelder 20a überwachen, stummgeschaltet, so dass diese kein Schaltsignal generieren, das zum Abschalten der Maschine 7 führt. Das fahrerlose Transportsystem 2 kann dann aus der Position C heraus die Maschine 7 anfahren und Material anlaufen, ohne dass im Schaltsignal generiert wird, das vom Abschalten der Maschine 7 führen würde. Ein Eindringen eines unzulässigen Objekts 13 abweichenden sicherheitskritischen Objekts 13 an die Schutzfelder 20 führt jedoch zu Generierung eines Schaltsignals, das ein Abschalten der Maschine 7 bewirkt.

### Bezugszeichenliste

- (1): Überwachungsvorrichtung
- (2): fahrerloses Transportsystem
- (3): Sensor
- (4): Einstellvorrichtung
- (5): Navigationssensor
- (6): Fahrzeugsteuerung
- (7): Maschine
- (7'): Maschine
- (7"): Maschine
- (8): Maschinensteuerung
- (9): Kommunikationseinrichtung
- (9a): Kommunikationsmodul
- (9b): Kommunikationsmodul
- (10): Lichtstrahl
- (11): Sender
- (12): Empfänger
- (13): Objekt
- (14): Auswerteeinheit
- (15): Messkopf
- (16): Sockel
- (17): Gehäuse
- (18): Fenster
- (19): Schaltanordnung
- (20): Schutzfeld
- (20'): Schutzfeld

## Patentansprüche

1. Überwachungsvorrichtung (1) mit einem Fahrzeug, auf welchem eine Fahrzeugsteuerung (6) und wenigstens ein Sensor (3) vorhanden sind, wobei der Sensor (3) zur Erfassung von Objekten (13) innerhalb wenigstens eines Schutzfelds ausgebildet ist, **dadurch gekennzeichnet, dass** eine berührungslos arbeitende Kommunikationseinrichtung (9) vorgesehen ist, welche für eine Datenübertragung zwischen dem Sensor (3) und/oder der Fahrzeugsteuerung (6) einerseits und einer Maschinensteuerung (8) einer stationären Maschine (7) ausgebildet ist, dass allein mit dem Sensor (3) an unterschiedlichen Bereichen der Maschine (7) eine Gefahrenbereichsüberwachung durchgeführt werden kann, wobei ein Gefahrenbereich an der Maschine dadurch überwacht wird, dass das Fahrzeug so an der Maschine (7) positioniert ist, dass der Gefahrenbereich zumindest teilweise vom Schutzfeld umfasst ist, wobei abhängig von Sensorsignalen des Sensors (3) in der Maschinensteuerung (8) ein Sicherheitssignal generiert wird.

2. Überwachungsvorrichtung (1) nach Anspruch 1, **dadurch gekennzeichnet, dass** die Fahrzeugsteuerung (6), die Maschinensteuerung (8), der Sensor (3) und die Kommunikationseinrichtung (9) sicherheitsgerichtete Einheiten ausbilden.

3. Überwachungsvorrichtung (1) nach einem der Ansprüche 1 oder 2, **dadurch gekennzeichnet, dass** der Sensor (3) ein optischer Sensor (3) oder ein Radarsensor ist, welcher zur Erfassung von Objekten (13) innerhalb zwei- und/oder dreidimensionaler Schutzfelder ausgebildet ist.

4. Überwachungsvorrichtung (1) nach einem der Ansprüche 1 - 3, **dadurch gekennzeichnet, dass** der Sensor (3) ein Distanzsensor ist.

5. Überwachungsvorrichtung (1) nach einem der Ansprüche 3 oder 4, **dadurch gekennzeichnet, dass** der optische Sensor (3) ein Flächendistanzsensor oder ein Kamera-Sensor ist.

6. Überwachungsvorrichtung (1) nach einem der Ansprüche 1 - 5, **dadurch gekennzeichnet, dass** von der Maschinensteuerung (8) über die Kommunikationseinrichtung (9) an die Fahrzeugsteuerung (6) eine Zielposition gesendet wird, an welcher das Fahrzeug positioniert werden soll.

7. Überwachungsvorrichtung (1) nach einem der Ansprüche 1 - 6, **dadurch gekennzeichnet, dass** von der Fahrzeugsteuerung (6) über die Kommunikationseinrichtung (9) an die Maschinensteuerung (8) in vorgegebenen Zeitabständen die aktuelle Ist-Position des Fahrzeugs an die Maschinensteuerung (8) übertragen wird.

8. Überwachungsvorrichtung (1) nach einem der Ansprüche 1 - 7, **dadurch gekennzeichnet, dass** das Fahrzeug ein autonomes Fahrzeug ist.

9. Überwachungsvorrichtung (1) nach einem der Ansprüche 1 - 8, **dadurch gekennzeichnet, dass** mittels des Sensors (3) ein Gefahrenbereich am Fahrzeug überwachbar ist.

10. Überwachungsvorrichtung (1) nach einem der Ansprüche 1 - 9, **dadurch gekennzeichnet, dass** anhand von Sensorsignalen des Sensors (3) eine Navigation des Fahrzeugs erfolgt.

11. Überwachungsvorrichtung (1) nach einem der Ansprüche 1 - 10, **dadurch gekennzeichnet, dass** mit dem Sensor (3) Objektüberwachung in unterschiedlichen Schutzfeldern durchführbar sind.

12. Überwachungsvorrichtung (1) nach Anspruch 11, **dadurch gekennzeichnet, dass** im Sensor (3) aus einer Vielzahl von Schutzfeldern ein spezifisches Schutzfeld aktivierbar ist.

13. Überwachungsvorrichtung (1) nach einem der Ansprüche 1 - 12, **dadurch gekennzeichnet, dass** am Fahrzeug eine Einstellvorrichtung (4) vorgesehen ist, mittels dessen die Orientierung des Sensors (3) einstellbar ist.

14. Überwachungsvorrichtung (1) nach Anspruch 13, **dadurch gekennzeichnet, dass** abhängig von der Orientierung des optischen Sensors (3) ein Schutzfeld aktivierbar ist.

15. Verfahren zur Absicherung von Gefahrenbereichen mittels einer Überwachungsvorrichtung (1) mit einem Fahrzeug, auf welchem eine Fahrzeugsteuerung (6) und wenigstens ein Sensor (3) vorhanden sind, wobei der Sensor (3) zur Erfassung von Objekten (13) innerhalb wenigstens eines Schutzfelds ausgebildet ist, **dadurch gekennzeichnet, dass** eine berührungslos arbeitende Kommunikationseinrichtung (9) vorgesehen ist, welche für eine Datenübertragung zwischen dem Sensor (3) und/oder der Fahrzeugsteuerung (6) einerseits und einer Maschinensteuerung (8) einer stationären Maschine (7) ausgebildet ist, dass ein Gefahrenbereich an der Maschine (7) dadurch überwacht wird, dass allein mit dem Sensor (3) an unterschiedlichen Bereichen der Maschine (7) eine Gefahrenbereichsüberwachung durchgeführt werden kann, wobei das Fahrzeug so an der Maschine (7) positioniert ist, dass der Gefahrenbereich zumindest teilweise vom Schutzfeld umfasst ist, wobei abhängig von Sensorsignalen des Sensors (3) in der Maschinensteuerung (8) ein Sicherheitssignal generiert wird.

## Claims

1. Monitoring device (1) with a vehicle on which a vehicle control (6) and at least one sensor (3) are provided, wherein the sensor (3) is designed to detect objects (13) within at least one protective field, **characterised in that** a contactless communication device (9) is provided, which is designed for data transmission between the sensor (3) and/or the vehicle control (6) on the one hand and a machine control (8) of a stationary machine (7) on the other hand, **in that** a hazardous area monitoring system can be carried out solely with the sensor (3) at different areas of the machine (7) can be carried out, wherein a hazardous area on the machine is monitored by the vehicle being positioned on the machine (7) such that the hazardous area is at least partially enclosed by the protective field, wherein a safety signal is generated in the machine control (8) depending on sensor signals from the sensor (3).

2. Monitoring device (1) according to claim 1, **characterised in that** the vehicle control (6), the machine control (8), the sensor (3) and the communication device (9) form safety-related units.

3. Monitoring device (1) according to one of claims 1 or 2, **characterised in that** the sensor (3) is an optical sensor (3) or a radar sensor which is designed to detect objects (13) within two- and/or three-dimensional protective fields.

4. Monitoring device (1) according to one of claims 1 to 3, **characterised in that** the sensor (3) is a distance sensor.

5. Monitoring device (1) according to one of claims 3 or 4, **characterised in that** the optical sensor (3) is a surface distance sensor or a camera-sensor.

6. Monitoring device (1) according to one of claims 1 to 5, **characterised in that** the machine control (8) sends a target position to which the vehicle is to be positioned to the vehicle control (6) via the communication device (9).

7. Monitoring device (1) according to one of claims 1 to 6, **characterised in that** the vehicle control (6) transmits the current actual position of the vehicle to the machine control (8) at predetermined intervals via the communication device (9).

8. Monitoring device (1) according to one of claims 1 to 7, **characterised in that** the vehicle is an autonomous vehicle.

9. Monitoring device (1) according to one of claims 1 to 8, **characterised in that** a hazardous area on the vehicle can be monitored by means of the sensor (3).

10. Monitoring device (1) according to one of claims 1 to 9, **characterised in that** the vehicle is navigated on the basis of sensor signals from the sensor (3).

11. Monitoring device (1) according to one of claims 1-10, **characterised in that** object monitoring can be carried out in different protective fields using the sensor (3).

12. Monitoring device (1) according to claim 11, **characterised in that** a specific protective field can be activated in the sensor (3) from a plurality of protective fields.

13. Monitoring device (1) according to one of claims 1-12, **characterised in that** an adjustment device (4) is provided on the vehicle, by means of which the orientation of the sensor (3) can be adjusted.

14. Monitoring device (1) according to claim 13, **characterised in that** a protective field can be activated depending on the orientation of the optical sensor (3).

15. Method for securing hazardous areas by means of a monitoring device (1) with a vehicle on which a vehicle control (6) and at least one sensor (3) are present, wherein the sensor (3) is designed to detect objects (13) within at least one protective field, **characterised in that** a contactless communication device (9) is provided, which is designed for data transmission between the sensor (3) and/or the vehicle control (6) on the one hand and a machine control (8) of a stationary machine (7) on the other hand, **in that** a hazardous area on the machine (7) is monitored by the fact that hazardous area monitoring can be carried out solely with the sensor (3) at different areas of the machine (7), wherein the vehicle is positioned on the machine (7) such that the hazardous area is at least partially enclosed by the protective field, wherein a safety signal is generated in the machine control (8) depending on sensor signals from the sensor (3).

## Revendications

1. Élément de surveillance (1) comprenant un véhicule sur lequel sont présents une commande de véhicule (6) et au moins un capteur (3), le capteur (3) étant conçu pour détecter des objets (13) à l'intérieur d'au moins un champ de protection, **caractérisé en ce qu'**il est prévu un dispositif de communication (9) fonctionnant sans contact, qui est conçu pour la transmission de données entre le capteur (3) et/ou la commande de véhicule (6) d'une part, et une commande de machine (8) d'une machine stationnaire (7) d'autre part, **en ce qu'**une surveillance de zone dangereuse peut être effectuée uniquement avec le capteur (3) au niveau de différentes zones de la machine (7), une surveillance de zone dangereuse pouvant être effectuée, une zone dangereuse sur la machine étant surveillée par le fait que le véhicule est positionné sur la machine (7) de telle sorte que la zone dangereuse est au moins partiellement comprise dans le champ de protection, un signal de sécurité étant généré dans la commande de machine (8) en fonction des signaux du capteur (3).

2. Élément de surveillance (1) selon la revendication 1, **caractérisé en ce que** la commande du véhicule (6), la commande de la machine (8), le capteur (3) et le dispositif de communication (9) forment des unités de sécurité.

3. Élément de surveillance (1) selon l'une des revendications 1 ou 2, **caractérisé en ce que** le capteur (3) est un capteur optique (3) ou un capteur radar qui est conçu pour détecter des objets (13) à l'intérieur de champs de protection bidimensionnels et/ou tridimensionnels.

4. Élément de surveillance (1) selon l'une des revendications 1 à 3, **caractérisé en ce que** le capteur (3) est un capteur de distance.

5. Élément de surveillance (1) selon l'une des revendications 3 ou 4, **caractérisé en ce que** le capteur optique (3) est un capteur de distance de surface ou un capteur de caméra.

6. Élément de surveillance (1) selon l'une des revendications 1 à 5, **caractérisé en ce que** la commande de machine (8) envoie à la commande de véhicule (6), via le dispositif de communication (9), une position cible à laquelle le véhicule doit être positionné.

7. Élément de surveillance (1) selon l'une des revendications 1 à 6, **caractérisé en ce que** la position réelle actuelle du véhicule est transmise par la commande du véhicule (6) à la commande de la machine (8) via le dispositif de communication (9) à intervalles prédéfinis.

8. Élément de surveillance (1) selon l'une des revendications 1 à 7, **caractérisé en ce que** le véhicule est un véhicule autonome.

9. Élément de surveillance (1) selon l'une des revendications 1 à 8, **caractérisé en ce qu'**une zone dangereuse autour du véhicule peut être surveillée à l'aide du capteur (3).

10. Élément de surveillance (1) selon l'une des revendications 1 à 9, **caractérisé en ce que** la navigation du véhicule s'effectue à l'aide des signaux du capteur (3).

11. Élément de surveillance (1) selon l'une des revendications 1 à 10, **caractérisé en ce que** le capteur (3) permet de surveiller des objets dans différents champs de protection.

12. Élément de surveillance (1) selon la revendication 11, **caractérisé en ce qu'**un champ de protection spécifique peut être activé dans le capteur (3) à partir d'une pluralité de champs de protection.

13. Élément de surveillance (1) selon l'une des revendications 1 à 12, **caractérisé en ce qu'**un dispositif de réglage (4) est prévu sur le véhicule, à l'aide duquel l'orientation du capteur (3) peut être réglée.

14. Élément de surveillance (1) selon la revendication 13, **caractérisé en ce qu'**un champ de protection peut être activé en fonction de l'orientation du capteur optique (3).

15. Procédé pour sécuriser des zones dangereuses à l'aide d'un élément de surveillance (1) avec un véhicule sur lequel sont présents une commande de véhicule (6) et au moins un capteur (3), le capteur (3) étant conçu pour détecter des objets (13) à l'intérieur d'au moins un champ de protection, **caractérisé en ce qu'**il est prévu un dispositif de communication (9) fonctionnant sans contact, qui est conçu pour une transmission de données entre le capteur (3) et/ou la commande de véhicule (6) d'une part, et une commande de machine (8) d'une machine stationnaire (7) d'autre part, **en ce qu'**une zone dangereuse sur la machine (7) est surveillée par le fait qu'une surveillance de zone dangereuse peut être effectuée uniquement avec le capteur (3) au niveau de différentes zones de la machine (7), le véhicule étant positionné sur la machine (7) de telle sorte que la zone dangereuse soit au moins partiellement comprise dans le champ de protection, un signal de sécurité étant généré dans la commande de machine (8) en fonction des signaux du capteur (3).
